Europäisches Patentamt

European Patent Office

Office européen des brevets

(11) Veröffentlichungsnummer: **0 475 253 A2**

## (12) EUROPÄISCHE PATENTANMELDUNG

(21) Anmeldenummer: **91114865.8**

(22) Anmeldetag: **03.09.91**

(51) Int. Cl.5: **A01N 31/06**

(30) Priorität: 04.09.90 DE 4027962
14.12.90 DE 4040075
08.05.91 DE 4114980

(43) Veröffentlichungstag der Anmeldung:
**18.03.92 Patentblatt 92/12**

(84) Benannte Vertragsstaaten:
**AT BE CH FR GB IT LI NL SE**

(71) Anmelder: **DETIA FREYBERG GMBH**
**Dr.-Werner-Freyberg-Str. 11**
**6947 Laudenbach/Bergstrasse(DE)**

(72) Erfinder: **Wolf, Joachim, Dipl.-Ing.**
**Adenauerallee 18**
**W-7950 Biberach(DE)**
Erfinder: **Forster, Hermann, Dipl.-Ing.**
**Ziegenweide 5**
**W-7918 Illertissen(DE)**

(74) Vertreter: **Weinhold, Peter, Dr. et al**
**Patentanwälte Dipl.-Ing. G. Dannenberg Dr.**
**P. Weinhold Dr. D. Gudel Dipl.-Ing. S.**
**Schubert Dr. P. Barz Siegfriedstrasse 8**
**W-8000 München 40(DE)**

(54) **Mittel und Verfahren zur Bekämpfung von Haus- und Staubmilben.**

(57) Es werden Mittel zur Bekämpfung von Haus- und Staubmilben vorgeschlagen, die durch einen Gehalt an einer Mentholverbindung gekennzeichnet sind sowie vorzugsweise durch ein festes oder flüssiges Trägermaterial. Weiterhin wird ein Verfahren zur Bekämpfung von Haus- und Staubmilben vorgeschlagen, das dadurch gekennzeichnet ist, daß als Wirkstoff mindestens eine Mentholverbindung, vorzugsweise (-) Menthol, verwendet wird.

EP 0 475 253 A2

Die Erfindung betrifft ein Mittel und ein Verfahren zur Bekämpfung von Haus- und Staubmilben.

Es ist allgemein bekannt, daß die in fast allen Wohnungen mehr oder weniger vorkommenden Milben beim Menschen häufig Allergien und asthmatische Beschwerden auslösen. Diese häufig unter der Bezeichnung Haus- oder Staubmilben zusammengefaßten Vertreter der Arten Dermatophagoides farinae, Dermatophagoides pteronyssinus, Euroglyphus maynei, Glycyphagus domesticus, Lepidoglyphus destructor, Acarus siro, Aleuroglyphus ovatus oder Blomia tropicalis verbergen sich vorzugsweise in Teppichen, Polstermöbeln und Matratzen. Die weniger als 1 mm großen, zur Gruppe der Spinnentiere (Acarina) gehörenden Milben sind unter diesen Umständen nur sehr schwer zu entdekken und zu bekämpfen. Teile ihres Chitinpanzers und ihrer Ausscheidungsprodukte, die in Kontakt zur menschlichen Haut kommen oder eingeatmet werden, lösen die Allergien aus.

Zur Bekämpfung dieser Milben wurden bisher die auch gegen andere Spinnentiere wirksamen Insektizide eingesetzt, welche zwar die Milben wirkungsvoll abtöten, jedoch den Nachteil besitzen, daß bei häufiger Anwendung gegen den unvermeidlichen Neubefall durch Milben die Allergiker auch gegen solche Mittel mit der Zeit allergisch reagieren können. Darüberhinaus besteht die Gefahr, daß Haustiere, deren Pfoten und Fell mit den behandelten Teppichen oder Postermöbeln in Kontakt kommen, diese Mittel durch Belecken des eigenen Körpers aufnehmen und sich damit schädigen können.

Es ist ferner bekannt, daß die durch Acarapis Woodi Rennie hervorgerufene Milbenseuche der Bienen, bei der in den Atemwegen der Biene parasitierenden Milben Flugunfähigkeit und Tod der Bienen herbeiführen, durch Einbringen großer Mengen von Menthol in die Bienenstöcke gebessert werden kann. Mengen von 50 g pro Bienenstock, die in fester Form mittels Petrischalen in die Stökke eingestellt werden, bewirken jedoch nach 74 Tagen eine nur etwa 80 %-ige Abtötung der Milben. Die in Bienenstöcken häufig vorkommende Varoa-Milbe wird dabei nicht wirksam mitbekämpft.

Es bestand daher die Aufgabe, ein neues Mittel und Verfahren zur Bekämpfung von Haus- und Staubmilben zu entwickeln, welches die Milben wirksam bekämpft, aber für Menschen und Tiere ungiftig ist und sich nach Beendigung der Behandlung rückstandsfrei wieder entfernen läßt.

Weiterhin sollte das zu entwickelnde Mittel preisgünstig und einfach herzustellen sein und seine Wirksamkeit auch bei langer Lagerung beibehalten.

Das zu entwickelnde Verfahren sollte darüberhinaus so einfach anzuwenden sein, daß es auch von ungeschultem Personal durchgeführt werden kann. Es sollte außerdem kein gesundheitliches Risiko darstellen.

Gegenstand der Erfindung ist ein Mittel zur Bekämpfung von Haus- und Staubmilben, gekennzeichnet durch einen Gehalt an einer Mentholverbindung sowie vorzugsweise ein festes oder flüssiges Trägermaterial.

Unter den Begriff Mentholverbindung werden hier alle stereoisomeren Formen sowie alle racemischen Formen des Menthols verstanden. (-)-3-p-Menthol, das hier als (-) Menthol bezeichnet wird, wird auch Pfefferminzkampfer oder Hexahydrothymol genannt und ist Hauptbestandteil des aus Pfefferminze gewonnenen Pfefferminzöls und anderer etherischer Öle. Als racemisches Menthol wird es beispielsweise aus m-Kresol oder Thymol hergestellt. Stereoisomere werden als Iso-, Neound Neoisomenthol bezeichnet. Mentholverbindungen sind für den Menschen und Säugetiere bei den wirksamen Mengen unschädlich, so daß Schäden allenfalls bei erheblicher Überdosierung eintreten können.

Wegen der besonders guten Wirkung wird (-) Menthol gegenüber dem Racemat und den stereoisomeren Formen bevorzugt. In der folgenden Beschreibung wird daher diese Verbindung beispielhaft genannt.

Das Menthol wird vorzugsweise zusammen mit einem festen oder flüssigen Trägermaterial verwendet. Als festes Trägermaterial kann jedes zweckmäßige oberflächenreiche anorganische oder organische Material verwendet werden, wie Kieselgel, Tonerde, Zellulose, Sägemehl, Papier, Pappe sowie Textil- oder Vliesmaterial.

Die Form des Trägermaterials ist nicht entscheidend, zweckmäßig liegen jedoch die Mittel in Form von Platten, Scheiben, Streifen, Schnipseln, Konfetti, Pellets, Granulat oder Pulver vor.

Die Mentholverbindung kann beispielsweise dadurch auf das feste Trägermaterial aufgebracht werden, daß dieses in eine Schmelze der Mentholverbindung eingetaucht oder auf andere geeignete Weise mit dieser imprägniert wird, wobei das Trägermaterial mit einer zweckmäßigen Menge an Mentholverbindung beladen wird. Bei den derart hergestellten Mitteln ist die Mentholverbindung an der Oberfläche des festen Trägermaterials abgeschieden oder adsorbiert. Im Falle des (-) Menthols ist es zweckmäßig, eine auf 40 bis 50°C erwärmte Schmelze zu verwenden.

Weitere Ausführungsformen zum Aufbringen der Mentholverbindungen auf den festen Träger werden in den Beispielen beschrieben.

Das erfindungsgemäße Mittel wird zweckmäßig nach seiner Herstellung luftdicht verpackt, z.B. in Plastikbeuteln oder in einer mit Polyethylen beschichteten Aluminiumfolie. Dadurch ist gewährleistet, daß sich der Gehalt an Mentholverbindung während der Lagerzeiten nicht verringert.

Im Falle eines flüssigen Trägermaterials bestehen bevorzugte Ausführungsformen der Erfindung darin, daß das Menthol in einem inerten Lösungsmittel, vorzugsweise in einem Alkohol oder Ether, insbesondere Ethanol, Propanol oder Isopropanol, gelöst oder dispergiert wird. Dabei kann eine für diesen Zweck an sich bekannte oberflächenaktive Substanz in zweckmäßiger Menge mitverwendet werden. Vorteilhaft kann das erfindungsgemäße Mittel in Form eines Pumpsprays oder, zusammen mit einem Treibmittel, vorzugsweise einer Mischung aus Propan und Butan, als Aerosol vorliegen, wobei Art und Menge der Bestandteile von einem Fachmann leicht ausgewählt werden können.

Das erfindungsgemäße Mittel eignet sich insbesondere zur Bekämpfung der folgenden Milbenarten:
Dermatophagoides farinae
Dermatophagoides pteronyssinus
Euroglyphus maynei
Glycyphagus domesticus
Lepidoglyphus destructor
Acarus siro
Aleuroglyphus ovatus
Blomia tropicalis.

Ein weiterer Gegenstand der Erfindung ist ein Verfahren zur Bekämpfung von Haus- und Staubmilben, das dadurch gekennzeichnet ist, daß als Wirkstoff mindestens eine Mentholverbindung, vorzugsweise (-) Menthol, verwendet wird.

Die erfindungsgemäße Verwendung von Mentholverbindungen, insbesondere von (-) Menthol, ist einfach. Da die Metholverbindungen von den Milben offensichtlich über die Atemluft und nicht durch direkten Kontakt aufgenommen werden, können sie entweder in fester Form an die befallenen Stellen gebracht werden, wobei sie sich aufgrund ihres hohen Dampfdruckes in der Luft verteilen, oder nach vorherigem Auflösen in einem geeigneten Lösungsmittel als Aerosol oder Spray versprüht werden.

Es hat sich gezeigt, daß Konzentrationen von 5 bis 50 mg (-) Menthol pro Liter des befallenen bzw. abgedeckten Raumes ausreichen, um wirkungsvoll innerhalb von 8 bis 48 Stunden alle Milben abzutöten.

Mit einer Mentholverbindung imprägnierte Papp- oder Papierstreifen oder Stücke von Textilien oder Vliesen können sehr einfach in Polsterspalten, unter Matratzen oder Teppiche gelegt werden und dort die Mentholverbindung freisetzen. Es ist auch möglich, imprägnierte Papierschnitzel, Konfetti, Pellets, Granulat oder Pulver beispielsweise auf befallene Teppiche aufzustreuen. Durch Abdecken mit einer Plastikplane lassen sich die entstehenden Mentholdämpfe wirksam im Bereich des Teppichs halten, so daß die gesamte Menge des zu verwendenden Menthols relativ gering bleibt. Entsprechend läßt sich beispielsweise auch der Befall der Betten durch Einlegen von mit Menthol getränkten Vliesen oder mit Menthol beschichteten Pappscheiben und Abdecken z.B. mittels einer Plastikplane (um das Entweichen des Menthols zu verhindern) wirksam behandeln. Dabei wird die Milbenbekämpfung nicht nur in der Matratze sondern auch in Winkeln und Ecken des Bettgestells wirksam vorgenommen.

Nach erfolgter Behandlung kann die überschüssige Mentholverbindung durch gründliches Lüften der Räume leicht entfernt werden, wobei etwa noch einige Tage anhaftende Reste aufgrund ihres angenehmen Geruchs nicht als störend empfunden werden. Das verbleibende feste Trägermaterial kann leicht entfernt werden, im Falle von Schnipseln, Konfetti, Pellets, Granulat oder Pulver beispielsweise mit Hilfe eines Staubsaugers.

In den folgenden Beispielen wird die Erfindung näher beschrieben, ohne daß diese darauf beschränkt sein soll. Soweit von Menthol gesprochen wird, wird dabei insbesondere (-) Menthol verstanden, jedoch können auch die anderen Mentholverbindungen analog eingesetzt werden.

Beispiel 1

Papp-Platten von 10 x 20 cm werden in flüssiges Menthol bei 45 - 46°C eingetaucht und durch Abkühlen auf 20°C das Menthol wieder zur Kristallisation gebracht. Jede Platte ist dabei mit etwa 15 - 18 g Menthol beschichtet. Durch Zerschneiden in 5 x 10 cm Streifen werden kleinere Platten mit einer Dosismenge von etwa 4 g hergestellt.

Diese Mittel sind insbesondere zum Einstellen in begrenzte Räume, in Polstermöbel und Betten und zum Unterlegen von Teppichen geeignet.

Beispiel 2

50 g Zellulosepulver werden mit 100 g Menthol bei 45°C zu einer Paste verrührt, auf 30°C abgekühlt und unter gleichzeitiger weiterer Kühlung durch ein Lochsieb mit einer Lochgröße von 1 mm zu einem Granulat gepreßt, welches in Plastikbeutel abgefüllt und bei Raumtemperatur gelagert werden kann. Das Mittel ist insbesondere zum Ausstreuen auf Teppiche und Teppichböden geeignet, wobei es nach dem Verdampfen des Menthols verbleibende Zellulosepulver anschließend mit einem Staubsauger wieder abgesaugt werden kann.

Beispiel 3

50 g Menthol werden in 100 ml Isopropanol gelöst und in Sprayflaschen abgefüllt. In dieser Form ist das Mittel insbesondere geeignet zum Behandeln von Tapeten und Wandbehängen sowie zum Einsprayen von Polstermöbeln.

Versuche über die Wirkung von (-) Menthol auf Milben

Für die folgenden Versuche wurden im Labor gezüchtete Dermatophagiodes-Milben der Familie Acaridae der Gattung Pteronyssinus verwendet. Mitglieder dieser Gattung halten sich bevorzugt in Teppichen und Polstermöbeln auf und können Kontaktdermatitis und Atmungsallergien hervorrufen.

1. Versuch: In Aquarien mit je 20 l Inhalt werden in Petrischalen jeweils 20 Tiere der Gattung Pteronyssinus gestellt. Unter den 20 Tieren befinden sich sowohl adulte Tiere als auch verschiedene Nympfenstadien. Um eine Flucht der Milben zu verhindern, wird um die Petrischale herum eine größere Petrischale gestellt, deren Boden mit Wasser bedeckt ist. In die Aquarien wurden zusätzlich Papp-Platten (20 x 28 cm) mit einem Mentholgehalt von 8 g bzw. 2 Platten von 7 x 16 cm mit 5 g Menthol eingestellt und zur Kontrolle ein Aquarium ohne Menthol mitgeführt.

Die Aquarien werden nach 1, 2, 4, 8 und 24 Stunden begutachtet. Soweit Milben zum Beobachtungszeitpunkt die Petrischale verlassen haben und in Wasser schwimmen, werden sie vorsichtig wieder in die Schale zurückgesetzt. Aufgrund ihrer langen Haare schwimmen sie auf dem Wasser und scheinen auch mehrere Tage durch das Schwimmen im Wasser nicht beeinflußt zu werden.

Bereits kurz nach dem Einstellen der Mentholplatten weisen 30 % der Tiere eine reduzierte Aktivität im Vergleich zu den Tieren in dem Kontrollaquarium auf, nach 1 Stunde sind bereits 10 % der Tiere tot, nach 4 Stunden etwa 34 und nach 8 Stunden 70 % der Tiere verstorben. Nach 24 Stunden sind alle Tiere in den mentholhaltigen Aquarien gestorben, während die Kontrolltiere auch nach 5 Tagen noch alle leben.

Die Mentholplatten werden nach 24 Stunden entnommen, wobei sich ein Gewichtsverlust der großen Platte von 1,6 g und der kleinen Platte von 0.7 g zeigt. Die Mentholkonzentration in den jeweiligen Aquarien berechnet sich darauf zu 0,08 g/l bzw. 0,035 g/l nach 24 Stunden. Nach 8 Stunden, bei der etwa die Hälfte der Tier verstorben ist, beträgt die Mentholkonzentration entsprechend 0,025 g und 0,01 g/l.

2. Versuch: In einem auf 22 °C geregelten Raum von 4 x 8 x 2,5 m Größe werden auf dem Boden wiederum vier Petrischalen mit jeweils 20 Milben der Pteronyssinus gestellt und in die Ecken des Raumes 4 Platten mit 20 x 28 cm Fläche und einem Gehalt von je 8 g Menthol ausgestellt. Der Gewichtsverlust pro Platte beträgt 1,6 g nach 1 Tag und 4,5 g nach 3 Tagen. Es zeigt sich nur eine sehr geringe Wirkung bei den Milben, wobei im Schnitt 1 Tier pro Petrischale und Tag gestorben ist. Die berechnete Konzentration von $1,6 \times 10^{-4}$ g/l ist offensichtlich zu niedrig, um die Milben wirksam zu schädigen.

3. Versuch: Der vorstehende Versuch wird wiederholt, jedoch wird der Raum durch Plastikplanen auf 80 x 110 x 200 cm verkleinert (1760 l). In diesem Raum werden 8 der vorstehenden Mentholplatten und 4 Petrischalen mit den Milben eingebracht.

Die Wirkung ist etwas geringer als in Versuch 1. Nach 4 Stunden sind 15 % der Tiere verstorben, nach 8 Stunden 20%, nach 24 Stunden 80 % und nach 48 Stunden sind alle Tiere gestorben. Wie zuvor leben die in einem Kontrollraum gehaltenen Kontrolltiere nach 48 Stunden alle.

Auch hier ist die Verdampfung des Menthols etwa 1,6 g/Platte und Tag, so daß sich eine Raumkonzentration nach 24 Stunden von $5,5 \times 10^{-3}$ g/l errechnet.

4. Versuch: Der vorstehende Versuch wird wiederholt, jedoch wird als Versuchstier eine Milbe der Gattung Dermatophagoides pharinae, die sich am häufigsten in Teppichen und Polstermöbeln aufhält, untersucht.

Die Tiere sind im Vergleich zur Pteronyssinus langsamer in ihrer Fortbewegung und werden daher nur seltener in Wasser gefunden. Sie reagieren jedoch wesentlich empfindlicher auf Menthol, so daß nach 1 Stunde bereits 15 % der Tiere tot sind, nach 8 Stunden 45 % und nach 24 Stunden 100 %.

Die vorstehenden Versuche zeigen, daß bei einer Luftkonzentration von etwa 5 bis 50 mg (-) Menthol die üblichen Haus- und Staubmilben innerhalb von maximal 48 Stunden wirksam abgetötet werden können.

**Patentansprüche**

1.  Mittel zur Bekämpfung von Haus- und Staubmilben, gekennzeichnet durch einen Gehalt an einer Mentholverbindung sowie vorzugsweise ein festes oder flüssiges Trägermaterial.

2.  Mittel nach Anspruch 1, gekennzeichnet durch einen Gehalt an (-) Menthol.

3.  Mittel nach Anspruch 1 oder 2, dadurch gekennzeichnet, daß das feste Trägermaterial ein oberflächenreiches anorganisches oder organisches Material ist wie Kieselgel, Tonerde, Zellulose, Sägemehl, Papier, Pappe, Textil- oder Vlies-Material.

4. Mittel nach mindestens einem der Ansprüche 1 bis 3, dadurch gekennzeichnet, daß das Mittel in Form von Platten, Scheiben, Streifen, Schnipseln, Konfetti, Pellets, Granulat oder Pulver vorliegt.

5. Mittel nach Anspruch 1 oder 2, dadurch gekennzeichnet, daß das flüssige Trägermaterial ein inertes Lösungsmittel ist, vorzugsweise ein Alkohol oder ein Ether, insbesondere Ethanol, Propanol oder Isopropanol, wobei das Mittel in Form einer Lösung oder Emulsion der Mentholverbindung im Lösungsmittel vorliegt, gegebenenfalls unter Verwendung einer oberflächenaktiven Substanz.

6. Mittel nach Anspruch 5, dadurch gekennzeichnet, daß das Mittel in Form eines Pumpsprays oder, zusammen mit einem Treibmittel, vorzugsweise einer Mischung aus Propan und Butan, als Aerosol vorliegt.

7. Verfahren zur Bekämpfung von Haus- und Staubmilben, dadurch gekennzeichnet, daß als Wirkstoff mindestens eine Mentholverbindung, vorzugsweise (-) Menthol, verwendet wird.

8. Verfahren nach Anspruch 7, dadurch gekennzeichnet, daß man die durch die Milben befallenen Orte mit einer zur Abtötung dieser Milben ausreichenden Menge an der Mentholverbindung beaufschlagt, z.B. mit 5 bis 50 mg/l des befallenen Raumes an (-) Menthol.

9. Verfahren nach mindestens einem der Ansprüche 7 und 8, dadurch gekennzeichnet, daß man die durch Milben befallenen Orte während der Einwirkung der Mentholverbindung mit einer Abdeckung versieht.